# EUROPEAN PATENT APPLICATION

(11) **EP 3 135 608 A1**
(43) Date of publication of application: **01.03.2017**
(21) Application number: 15782529.0
(22) Date of filing: 13.03.2015
(51) Int. Cl.: B65D 90/00, F24F 5/00, F28D 20/00

(54) **HEAT STORAGE TANK UNIT AND AIR CONDITIONING SYSTEM**

(30) Priority: 25.04.2014 JP 2014091850
(71) Applicant: Daikin Industries, Ltd., Osaka-shi, Osaka 530-8323 (JP)
(72) Inventor: YASUO, Kouichi, Kita-ku, Osaka-shi Osaka 530-8323 (JP); FUJIMOTO, Shuuji, Kita-ku, Osaka-shi Osaka 530-8323 (JP); CHEN, Kebi, Kita-ku, Osaka-shi Osaka 530-8323 (JP)
(74) Representative: Hoffmann Eitle
(86) International application number: PCT/JP2015/001408
(87) International publication number: WO 2015/162847

(57) **Abstract**

Formation of a fixed flow path in a thermal storage tank is reduced. A cylindrical thermal storage tank (52) accumulating a thermal storage medium in which clathrate hydrates are generated when cooled is connected to an inlet pipe (55) which leads the thermal storage medium to flow into the thermal storage tank (52), and an outlet pipe (56) which leads the thermal storage medium in the thermal storage tank (52) to flow out of the thermal storage tank (52). The inlet pipe (55) has an outlet end (55a) located below an inlet end (56a) of the outlet pipe (56). The inlet pipe (55) discharges the thermal storage medium in the axial direction of the thermal storage tank (52) at approximately a center of a horizontal cross section of the thermal storage tank (52).

## Description

### TECHNICAL FIELD

The present invention relates to a thermal storage tank unit configured to store cold thermal energy by utilizing the thermal storage effect of a thermal storage medium, and to an air-conditioning system configured to provide air conditioning by utilizing the cold thermal energy.

### BACKGROUND ART

Known air-conditioning systems include a room air conditioning system which is configured by a thermal storage circuit and a refrigerant circuit and which utilizes a thermal storage medium as a source of cold thermal energy as described in Patent Document 1. The thermal storage circuit is typically comprised of a thermal storage tank configured to store the thermal storage medium, a thermal storage heat exchanger configured to exchange heat between the thermal storage medium and a thermal medium (e.g., refrigerant), and a circulation pump, etc. The refrigerant circuit is typically comprised of a thermal storage heat exchanger and a utilization-side heat exchanger, etc. The utilization-side heat exchanger cools the room air in the thermal storage heat exchanger by utilizing the cold thermal energy taken out from the thermal storage medium.

Patent Document 1 utilizes, as a thermal storage medium, such a thermal storage material (e.g., a tetra-n-butyl ammonium bromide aqueous solution) in which clathrate hydrates are generated when cooled. To store the cold thermal energy in the thermal storage tank, Patent Document 1 performs a cool storage operation in which the thermal storage medium which has been cooled in the thermal storage heat exchanger is accumulated in the thermal storage tank.

### CITATION LIST

### PATENT DOCUMENT

Patent Document 1: Japanese Unexamined Patent Publication No. 2013-083439

### SUMMARY OF THE INVENTION

### TECHNICAL PROBLEM

In the cool storage operation, the path for the thermal storage medium (i.e., thermal storage path) in the thermal storage heat exchanger may be clogged with the clathrate hydrates, which may lower the heat exchange properties of the thermal storage heat exchanger. It is therefore recommended to perform a heating operation, in which the thermal storage path is heated by the thermal medium, after a certain period of the cool storage operation, because heating of the thermal storage path allows the clathrate hydrates clogging the thermal storage path to separate from the thermal storage path, and the thermal storage path to be open. The separated clathrate hydrates flow into the thermal storage tank.

In this heating operation, the thermal storage medium which has been cooled in the cool storage operation (specifically, the thermal storage medium containing a subcooled solution and the clathrate hydrates) is accumulated in the thermal storage tank. On the other hand, in the heating operation, the thermal storage medium having a temperature higher than the temperature thereof in the cool storage operation (e.g., higher than the temperature at which hydrates are generated) flows into the thermal storage tank, since the thermal storage path is heated in the heating operation. The thermal storage medium which has flowed into the thermal storage tank melts the clathrate hydrates, and the thermal storage medium which has melted and generally become a solution flows into an upper portion of the thermal storage tank.

In general, however, the inlet of the thermal storage tank for the thermal storage medium is located below the outlet thereof. Besides, both of the inlet and the outlet are formed on the sidewall of the tank. The thermal storage medium in the form of a solution tends to flow along a portion in the tank, e.g., the sidewall, where the thermal storage medium can easily flow. Thus, in the heating operation, there is formed in the thermal storage tank a fixed flow path of the thermal storage medium which connects the inlet and the outlet in the shortest distance. If this happens, the thermal storage medium cooled in the thermal storage heat exchanger during a cool storage operation after the heating operation, flows out of the thermal storage tank through the fixed flow path formed in the thermal storage tank without causing any change in the temperature of the thermal storage medium in the thermal storage tank, while maintaining its state when it has flowed into the tank. As a result, a required amount of cold thermal energy is less likely to be accumulated in the thermal storage tank. In addition, the thermal storage medium which has flowed out of the thermal storage tank flows into the thermal storage heat exchanger again. This leads to more possibilities of clogging of the thermal storage heat exchanger, and hence a reduction in the heat exchange properties.

In view of the foregoing, it is therefore an object of the present invention to reduce the formation of a fixed flow path in the thermal storage tank.

### SOLUTION TO THE PROBLEM

A first aspect of the present disclosure is directed to a thermal storage tank unit connected to a thermal storage heat exchanger (29) which exchanges heat between a thermal storage medium in which clathrate hydrates are generated when cooled, and a thermal medium. The thermal storage tank unit includes: a cylindrical thermal storage tank (52) capable of accumulating the thermal storage medium therein after the heat exchange in the thermal storage heat exchanger (29), the cylindrical thermal storage tank (52) being arranged to have its axial direction extend vertically; an inlet pipe (55) whose inlet end is connected to an outflow side of the thermal storage heat exchanger (29) and whose outlet end (55a) is inserted in the thermal storage tank (52) to lead the thermal storage medium to flow into the thermal storage tank (52); and an outlet pipe (56) whose inlet end (56a) is inserted in the thermal storage tank (52) and whose outlet end is connected to an inflow side of the thermal storage heat exchanger (29) to lead the thermal storage medium in the thermal storage tank (52) to flow out of the thermal storage tank (52). The outlet end (55a) of the inlet pipe (55) is located below the inlet end (56a) of the outlet pipe (56). The inlet pipe (55) discharges the thermal storage medium in the axial direction of the thermal storage tank (52) at approximately a center of a horizontal cross section of the thermal storage tank (52).

In this thermal storage tank unit, the thermal storage medium is discharged in the thermal storage tank (52) in the axial direction of the thermal storage tank (52) at approximately the center of the thermal storage tank (52). This allows the thermal storage medium to flow smoothly in all directions from where it is discharged and disperse in the thermal storage tank (52). As a result, formation of a fixed flow path (pa) in the thermal storage tank (52) is reduced. Thus, a necessary amount of cold thermal energy is stored in the thermal storage tank (52). In addition, the thermal storage path (29b) in the thermal storage heat exchanger (29) is less likely to be clogged with the clathrate hydrates, and the degree of decrease in the heat exchange properties is reduced.

A second aspect of the present disclosure is an embodiment of the first aspect of the present disclosure. In the second aspect, the inlet pipe (55) discharges the thermal storage medium downward in the thermal storage tank (52) in the axial direction of the thermal storage tank (52).

This configuration allows the thermal storage medium, once it is discharged from the inlet pipe (55) to the bottom side of the thermal storage tank (52), to flow smoothly to the upper side of the thermal storage tank (52) while spreading in all directions along the bottom and the sidewall of the tank. This reduces the formation of the fixed flow path (pa).

A third aspect of the present disclosure is an embodiment of the first aspect of the present disclosure. In the third aspect, the inlet pipe (55) discharges the thermal storage medium upward in the thermal storage tank (52) in the axial direction of the thermal storage tank (52).

This configuration allows the thermal storage medium, once it is discharged from the inlet pipe (55) to the upper side of the thermal storage tank (52), to flow to the upper side and then collide with a layer of clathrate hydrate (i.e., a layer of slurry) in the thermal storage medium contained in the thermal storage tank (52). This thermal storage medium thereafter flows smoothly to the upper side of the thermal storage tank (52), while spreading in all directions along the bottom and the sidewall of the tank. This reduces the formation of the fixed flow path (pa).

A fourth aspect of the present disclosure is an embodiment of the second or third aspect of the present disclosure. In the fourth aspect, the inlet end (56a) of the outlet pipe (56) is located near a sidewall of the thermal storage tank (52), and the thermal storage medium is taken into the outlet pipe (56) in an approximately horizontal direction.

In this configuration, the thermal storage medium, which is a solution in large part, flows out of the thermal storage tank (52) when taken into the outlet pipe (56) in the horizontal direction.

A fifth aspect of the present disclosure is an embodiment of the second or third aspect of the present disclosure. In the fifth aspect, the thermal storage medium is taken into the outlet pipe (56) from above along the axial direction of the thermal storage tank (52) at approximately the center of the horizontal cross section of the thermal storage tank (52).

In this configuration, the thermal storage medium, which is a solution in large part, is taken into the outlet pipe (56) from approximately the center of the thermal storage tank (52) and from above. Thus, the thermal storage medium which has been discharged from the inlet pipe (55) is more likely to flow in all directions in the thermal storage tank (52) to the upper side of the thermal storage tank (52), and drift of the thermal storage medium in the thermal storage tank (52) is less likely to occur. Further, the outlet pipe (56) of this type allows the thermal storage medium to have a higher temperature when it flows out of the thermal storage tank (52) than the outlet pipe (56) which does not take the thermal storage medium therein from above. Thus, it is less likely that the thermal storage path (29b) of the thermal storage heat exchanger (29) is clogged, and hence the heat exchange effectiveness of the thermal storage heat exchanger (29) is improved, compared with a thermal storage tank unit using the outlet pipe (56) that does not take the thermal storage medium therein from above.

A sixth aspect of the present disclosure is an embodiment of the fifth aspect of the present disclosure. In the sixth aspect, the outlet pipe (56) has an increased diameter at the inlet end (56a) of the outlet pipe (56).

In this configuration, the inlet end (56a) of the outlet pipe (56) is less likely to be clogged even if clathrate hydrates in the thermal storage medium adhere to, and are build up at, the periphery of the inlet end (56a).

A seventh aspect of the present disclosure is directed to an air-conditioning system which includes: the thermal storage tank unit (50) of any one of the first to sixth aspects of the present disclosure; the thermal storage heat exchanger (29) having a thermal storage path (29b) in which the thermal storage medium flows and a thermal medium path (29a) in which the thermal medium flows, the thermal storage path (29b) being connected to the thermal storage tank unit (50); an utilization-side heat exchanger (25) connected to the thermal medium path (29a) and capable of cooling a target space for air conditioning by using, as a source of cold thermal energy, the thermal storage medium accumulated in the thermal storage tank (52) of the thermal storage tank unit (50); and an operation control section (100) capable of performing a cooling operation in which the target space for air conditioning is cooled by using the thermal storage medium as cold thermal energy, and a heating operation in which if the thermal storage path (29b) is clogged with the thermal storage medium in a state of slurry, a thermal medium with a temperature higher than a temperature at which hydrates of the thermal storage medium are generated is allowed to flow in the thermal medium path (29a), thereby removing the thermal storage medium from the thermal storage path (29b).

The fixed flow path (pa) is typically formed in the thermal storage tank (52) in the heating operation. In the above air-conditioning system, however, such a fixed flow path (pa) is less likely to be formed even in the heating operation, since the thermal storage tank unit (51) according to any one of the first to sixth aspects of the present disclosure is adopted in the air-conditioning system. Thus, a necessary amount of cold thermal energy may be stored in the thermal storage tank (52), and a target space for air conditioning may be cooled by using the cold thermal energy stored.

### ADVANTAGES OF THE INVENTION

According to the first aspect of the present disclosure, the fixed flow path (pa) is less likely to be formed in the thermal storage tank (52). Thus, a necessary amount of cold thermal energy is stored in the thermal storage tank (52). Further, the thermal storage path (29b) in the thermal storage heat exchanger (29) is less likely to be clogged with the clathrate hydrates, and the degree of decrease in the heat exchange properties is reduced.

According to the second and third aspects, the fixed flow path (pa) is less likely to be formed.

According to the fourth aspect, the thermal storage medium in the state of a solution flows out of the thermal storage tank (52) when it is taken into the outlet pipe (56) in the horizontal direction in an upper portion of the thermal storage tank (52).

According to the fifth aspect, it is less likely that the thermal storage path (29b) of the thermal storage heat exchanger (29) is clogged, and hence the heat exchange effectiveness of the thermal storage heat exchanger (29) is improved, compared with a thermal storage tank unit using the outlet pipe (56) that does not take the thermal storage medium therein from above.

According to the sixth aspect, the inlet end (56a) of the outlet pipe (56) is less likely to be clogged even if clathrate hydrates adhere to, and are build up at, the periphery of the inlet end (56a).

According to the seventh aspect, the fixed flow path (pa) is less likely to be formed even in the heating operation. Thus, a necessary amount of cold thermal energy may be stored in the thermal storage tank (52), and a target space for air conditioning may be cooled by using the cold thermal energy stored.

### BRIEF DESCRIPTION OF THE DRAWINGS

[FIG. 1] FIG. 1 shows a configuration diagram of an air-conditioning system.
[FIG. 2] FIG. 2 shows a flow of a refrigerant and a flow of a thermal storage medium in a cool storage operation and a heating operation.
[FIG. 3] FIG. 3 shows a flow of the refrigerant and a flow of the thermal storage medium in a first utilization cooling operation.
[FIG. 4] FIG. 4 shows a flow of the refrigerant and a flow of the thermal storage medium in a second utilization cooling operation.
[FIGS. 5(A) and 5(B)] FIG. 5(A) shows the appearance of a thermal storage tank unit according to a first embodiment. FIG. 5(B) shows a longitudinal cross section of the thermal storage tank unit.
[FIG. 6] FIG. 6 shows a longitudinal cross section of a known thermal storage tank unit.
[FIGS. 7(A) and 7(B)] FIG. 7(A) shows the appearance of a thermal storage tank unit according to a second embodiment. FIG. 7(B) shows a longitudinal cross section of the thermal storage tank unit.
[FIGS. 8(A) and 8(B)] FIG. 8(A) shows the appearance of a thermal storage tank unit according to a third embodiment. FIG. 8(B) shows a longitudinal cross section of the thermal storage tank unit.
[FIG. 9] FIG. 9 shows the appearance of a thermal storage tank unit according to a fourth embodiment.
[FIGS. 10(A) and 10(B)] FIG. 10(A) shows a vicinity of the inlet end of a known outlet pipe. FIG. 10(B) shows a vicinity of the inlet end of the outlet pipe of FIG. 9.

### DESCRIPTION OF EMBODIMENTS

Embodiments of the present invention will be described in detail below, based on the drawings. The following embodiments are merely preferred examples in nature, and are not intended to limit the scope, application, or uses of the invention.

### <<First Embodiment>>

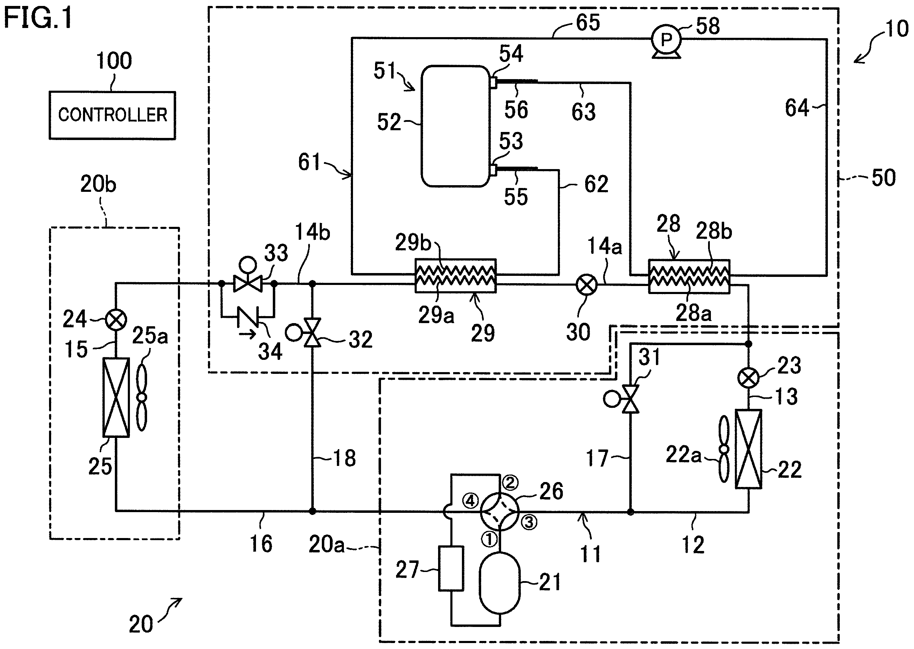

FIG. 1 shows a configuration diagram of an air-conditioning system (10). As illustrated in FIG. 1, the air-conditioning system (10) includes an air conditioner (20), a thermal storage device (50), and a controller (100) (which corresponds to an operation control section).

The thermal storage device (50) includes a thermal storage tank unit (51) according to the first embodiment, an auxiliary heat exchanger (28), a thermal storage heat exchanger (29), a thermal storage expansion valve (30), a circulation pump (58), and other types of valves (32, 33, 34). Devices included in the thermal storage device (50) comprise a thermal storage circuit (61).

The air conditioner (20) includes an outdoor unit (20a) and an indoor unit (20b). Devices included in each of the units (20a, 20b) and some of the devices included in the thermal storage device (50) (namely, the auxiliary heat exchanger (28), the thermal storage heat exchanger (29), the thermal storage expansion valve (30), and the other types of valves (32, 33, 34)) comprise a refrigerant circuit (11).

The controller (100) is for controlling operation of the air-conditioning system (10), and controls the activation of a compressor (21) of the refrigerant circuit (11), the circulation pump (58) of the thermal storage circuit (61), etc.

### <Configuration of Refrigerant Circuit>

The refrigerant circuit (11) is filled with a refrigerant (which corresponds to a thermal medium), and a refrigerant circulates to perform a refrigeration cycle. As illustrated in FIG. 1, the refrigerant circuit (11) is typically comprised of the compressor (21), an outdoor heat exchanger (22), an outdoor expansion valve (23), an indoor expansion valve (24), an indoor heat exchanger (25), a four-way switching valve (26), the auxiliary heat exchanger (28), the thermal storage heat exchanger (29), and the thermal storage expansion valve (30). The compressor (21), the outdoor heat exchanger (22), the outdoor expansion valve (23), and the four-way switching valve (26) are arranged in the outdoor unit (20a). The indoor expansion valve (24) and the indoor heat exchanger (25) are arranged in the indoor unit (20b).

The compressor (21) compresses the refrigerant and discharges the compressed refrigerant. The compressor (21) is, for example, a variable capacity compressor, the rotational speed (i.e., the operating frequency) of which is varied by an inverter circuit (not shown).

The outdoor heat exchanger (22) is connected to the four-way switching valve (26) through a pipe (12). The outdoor heat exchanger (22) is, for example, a cross-fin-and-tube heat exchanger, and is configured to exchange heat between outdoor air supplied therein by an outdoor fan (22a) arranged in the outdoor unit (20a) and the refrigerant.

The outdoor expansion valve (23) is connected to the outdoor heat exchanger (22) through a pipe (13), and is connected to the indoor expansion valve (24) through pipes (14a, 14b). The outdoor expansion valve (23) and the indoor expansion valve (24) are comprised, for example, of electronic expansion valves, and are configured to adjust the pressure of the refrigerant by changing the degrees of opening of the valves.

The indoor heat exchanger (25) is connected to the indoor expansion valve (24) through a pipe (15), and is connected to the four-way switching valve (26) through a pipe (16). The indoor heat exchanger (25) is, for example, a cross-fin-and-tube heat exchanger, and is configured to exchange heat between indoor air supplied therein by an indoor fan (25a) arranged in the indoor unit (20b) and the refrigerant.

The four-way switching valve (26) has four ports. Specifically, a first port of the four-way switching valve (26) is connected to the discharge side of the compressor (21). A second port of the four-way switching valve (26) is connected to the suction side of the compressor (21) via an accumulator (27). A third port of the four-way switching valve (26) is connected to the outdoor heat exchanger (22) via the pipe (12). A fourth port of the four-way switching valve (26) is connected to the indoor heat exchanger (25) via the pipe (16). The four-way switching valve (26) switches the connection state of the ports to the first state (the state indicated by solid line in FIG. 1) or the second state (the state indicated by broken line in FIG. 1) according to the operation type of the air-conditioning system (10).

The auxiliary heat exchanger (28) has a refrigerant path (28a) and a thermal storage path (28b). The refrigerant path (28a) is located on a pipe (14a), that is, between the outdoor expansion valve (23) and the thermal storage expansion valve (30), and refrigerant flows through the refrigerant path (28a). The thermal storage path (28b) is connected in series to the thermal storage circuit (61), and a thermal storage medium (which will be described later) flows through the thermal storage path (28b). The auxiliary heat exchanger (28) is configured to exchange heat between the refrigerant and the thermal storage medium.

The thermal storage heat exchanger (29) has a refrigerant path (29a) (which corresponds to a thermal medium path) and a thermal storage path (29b). The refrigerant path (29a) is located on a pipe (14b) between the thermal storage expansion valve (30) and the indoor expansion valve (24), and refrigerant flows through the refrigerant path (29a). The thermal storage path (29b) is connected in series to the thermal storage circuit (61), and the thermal storage medium flows through the thermal storage path (29b). The thermal storage heat exchanger (29) is configured to exchange heat between the refrigerant and the thermal storage medium.

The thermal storage expansion valve (30) is connected to the auxiliary heat exchanger (28) through the pipe (14a), and is connected to the thermal storage heat exchanger (29) through the pipe (14b). The thermal storage expansion valve (30) is comprised, for example, of an electronic expansion valve, and is configured to adjust the pressure of the refrigerant by changing the degree of opening of the valve.

The refrigerant circuit (11) is provided with three opening/closing valves (31, 32, 33) and one check valve (34). The first opening/closing valve (31) is located on a first bypass pipe (17), and the second opening/closing valve (32) is located on a second bypass pipe (18). The first bypass pipe (17) connects the pipe (12) and a portion of the pipe (14a) between the outdoor expansion valve (23) and the auxiliary heat exchanger (28). The second bypass pipe (18) connects the pipe (16) and a portion of the pipe (14b) between the thermal storage heat exchanger (29) and the indoor expansion valve (24). The third opening/closing valve (33) is located on a portion of the pipe (14b) between the thermal storage heat exchanger (29) and the indoor expansion valve (24), and is closer to the indoor expansion valve (24) than the junction of the second bypass pipe (18) and the pipe (14b) is. The check valve (34) is connected in parallel with the third opening/closing valve (33). The check valve (34) is arranged to allow the refrigerant to flow toward the thermal storage heat exchanger (29) from the side closer to the indoor expansion valve (24) if the refrigerant pressure at the third opening/closing valve (33) on the side closer to the indoor expansion valve (24) exceeds a predetermined value.

### <Configuration of Thermal Storage Circuit>

The thermal storage circuit (61) is filled with a thermal storage medium, and a cycle for storing cold thermal energy, for example, is performed by circulating the thermal storage medium. The thermal storage circuit (61) is typically comprised of the auxiliary heat exchanger (28) and the thermal storage heat exchanger (29) in addition to the thermal storage tank unit (51) and the circulation pump (58).

Now, the thermal storage medium according to the first embodiment will be described. A thermal storage material in which clathrate hydrates are generated when cooled, that is, a thermal storage material having flow properties, is adopted as the thermal storage medium. Examples of the thermal storage medium include tetra butyl ammonium bromide (TBAB) aqueous solution, trimethylolethane (TME) aqueous solution, and paraffin-based slurry. For example, the state as an aqueous solution of a tetra-n-butyl ammonium bromide aqueous solution is maintained even if it is cooled in a stable manner and turns into a subcooled state in which the temperature of the aqueous solution is lower than a temperature at which hydrates are generated. However, once some trigger is given in this subcooled state, the subcooled solution transitions to a solution containing clathrate hydrates (i.e., transitions to slurry). That is, the subcooled state of the tetra-n-butyl ammonium bromide aqueous solution is changed to the state of slurry with relatively high viscosity due to the generation of clathrate hydrates (hydrate crystals) made of tetra butyl ammonium bromide and water molecules. The subcooled state as used herein refers to the state in which clathrate hydrates are not generated and the state of solution is maintained even when the thermal storage medium comes to have a temperature lower than or equal to the temperature at which hydrates are generated. On the other hand, the tetra-n-butyl ammonium bromide aqueous solution in the state of slurry is changed to the state of liquid (i.e., a solution) with relatively high flow properties due to melting of the clathrate hydrates, if the temperature of the aqueous solution becomes higher, by heating, than the temperature at which the hydrates are generated. Note that the temperature at which hydrates are generated in the tetra-n-butyl ammonium bromide aqueous solution is higher than 0°C, e.g., 12°C.

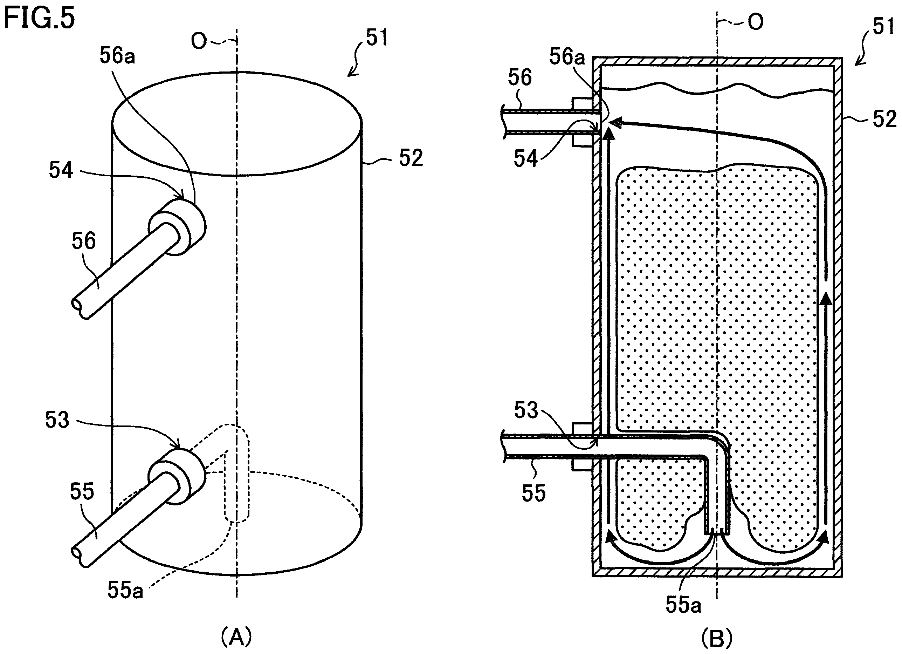

As illustrated in FIGS. 1 and 5, the thermal storage tank unit (51) is comprised of a thermal storage tank (52), an inlet pipe (55) and an outlet pipe (56). As illustrated in FIG. 5, the thermal storage tank (52) is a hollow cylindrical container arranged to have its axial direction extend vertically. The upper and lower ends of the thermal storage tank (52) are closed. The thermal storage medium is accumulated in the thermal storage tank (52). The thermal storage tank (52) is provided with a first opening (53) at a lower portion of its sidewall, and with a second opening (54) at an upper portion of its sidewall.

As illustrated in FIGS. 1 and 5, the inlet pipe (55) is attached to the thermal storage tank (52) via the first opening (53) to lead the thermal storage medium to flow into the thermal storage tank (52). The inlet end of the inlet pipe (55) for the thermal storage medium is connected to one end of the thermal storage path (29b) of the thermal storage heat exchanger (29) via the pipe (62). The outlet end (55a) of the inlet pipe (55) for the thermal storage medium communicates with the interior of the thermal storage tank (52).

As illustrated in FIGS. 1 and 5, the outlet pipe (56) is attached to the thermal storage tank (52) via the second opening (54) to lead the thermal storage medium in the thermal storage tank (52) to flow out of the tank (52). The inlet end (56a) of the outlet pipe (56) for the thermal storage medium communicates with the interior of the thermal storage tank (52). The outlet end of the outlet pipe (56) for the thermal storage medium is connected to one end of the thermal storage path (28b) of the auxiliary heat exchanger (28) via the pipe (63).

More configurations of the thermal storage tank unit (51) will be described later.

The circulation pump (58) is configured to circulate the thermal storage medium in the direction from the auxiliary heat exchanger (28) to the thermal storage heat exchanger (29) in the thermal storage circuit (61) illustrated in FIG. 1. The circulation pump (58) is connected to the other end of the thermal storage path (28b) of the auxiliary heat exchanger (28) via the pipe (64), and is connected to the other end of the thermal storage path (29b) of the thermal storage heat exchanger (29) via the pipe (65). It can accordingly be said that the inlet end of the inlet pipe (55) is connected to the outflow end of the thermal storage heat exchanger (29) through which the thermal storage medium flows out of the thermal storage heat exchanger (29), and that the outlet end of the outlet pipe (56) is connected to the inflow end of the thermal storage heat exchanger (29) through which the thermal storage medium flows into the thermal storage heat exchanger (29). The controller (100) controls the on/off operations of the circulation pump (58) and the transfer amount of the thermal storage medium by the circulation pump (58).

The above configurations show that the thermal storage circuit (61) is a closed circuit.

### <Operation of Air-Conditioning System>

Operation types of the air-conditioning system (10) are roughly divided into an operation in which the thermal storage medium circulates in the thermal storage circuit (61) simultaneously with the circulation of the refrigerant in the refrigerant circuit (11), and an operation in which only the circulation of the refrigerant in the refrigerant circuit (11) is performed. The former operation mentioned above will be described below. Examples of such an operation include a cool storage operation, a utilization cooling operation (which corresponds to a cooling operation) and a heating operation.

### -Cool Storage Operation-

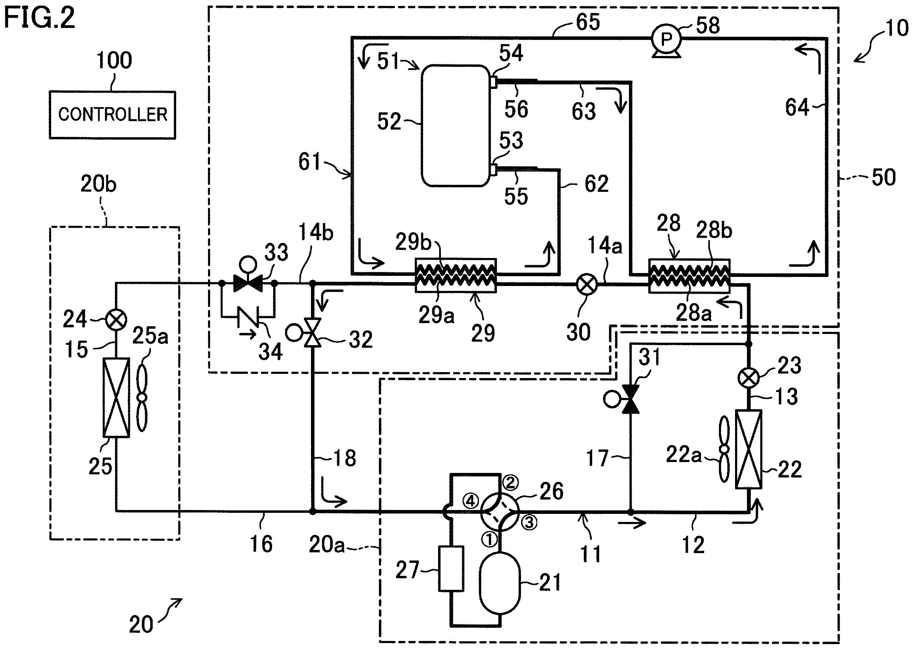

In the cool storage operation shown in FIG. 2, the refrigerant condensed and cooled by the outdoor heat exchanger (22) and the auxiliary heat exchanger (28) evaporates in the refrigerant path (29a) of the thermal storage heat exchanger (29), and hence the thermal storage medium in the thermal storage path (29b) is cooled and accumulated in the thermal storage tank (52). The refrigerant circuit (11) performs a refrigeration cycle in which the outdoor heat exchanger (22) serves as a condenser and the thermal storage heat exchanger (29) serves as an evaporator. The thermal storage medium circulates in the thermal storage circuit (61) such that the thermal storage medium having flowed out of the thermal storage tank (52) sequentially passes through the auxiliary heat exchanger (28) and the thermal storage heat exchanger (29) and flows into the thermal storage tank (52) again.

Specifically, the four-way switching valve (26) is set to the first state; the first opening/closing valve (31) and the third opening/closing valve (33) are set to a closed state; and the second opening/closing valve (32) is set to an open state. The degree of opening of the outdoor expansion valve (23) is set to a fully-open state; that of the indoor expansion valve (24) is set to a fully-closed state; and that of the thermal storage expansion valve (30) is set to a predetermined degree (i.e., such a degree of opening which allows the refrigerant at the exit of the refrigerant path (29a) of the thermal storage heat exchanger (29) to have a predetermined target degree of superheat). The compressor (21) and the outdoor fan (22a) are actuated.

The refrigerant discharged from the compressor (21) flows into the outdoor heat exchanger (22) through the pipe (12), and dissipates heat to the outdoor air and is thus condensed in the outdoor heat exchanger (22). The condensed refrigerant flows into the refrigerant path (28a) of the auxiliary heat exchanger (28) through the outdoor expansion valve (23), and is further cooled by the thermal storage medium flowing through the thermal storage path (28b), while the refrigerant passes through the refrigerant path (28a). The refrigerant which has flowed out of the auxiliary heat exchanger (28) is decompressed by the thermal storage expansion valve (30), and then absorbs heat from the thermal storage medium in the thermal storage heat exchanger (29) and evaporates. The evaporated refrigerant is temporarily taken into the accumulator (27) through the second bypass pipe (18) and the four-way switching valve (26), and thereafter a gas refrigerant separated from a liquid refrigerant is taken into the compressor (21) and compressed.

In the thermal storage circuit (61), the circulation pump (58) is actuated. The thermal storage medium in the thermal storage tank (52) flows into the thermal storage path (28b) of the auxiliary heat exchanger (28) through the second opening (54) and the pipes (56, 63). The thermal storage medium is heated, while passing through the thermal storage path (28b), by the refrigerant flowing through the refrigerant path (28a). The heated thermal storage medium flows into the thermal storage path (29b) of the thermal storage heat exchanger (29) through the circulation pump (58) and the pipes (64, 65). The thermal storage medium is cooled, while passing through the thermal storage path (29b), by the refrigerant flowing through the refrigerant path (29a). The cooled thermal storage medium flows into the thermal storage tank (52) through the pipes (62, 55) and the first opening (53). The cold thermal energy is stored in the thermal storage tank (52) in this manner.

### -Utilization Cooling Operation-

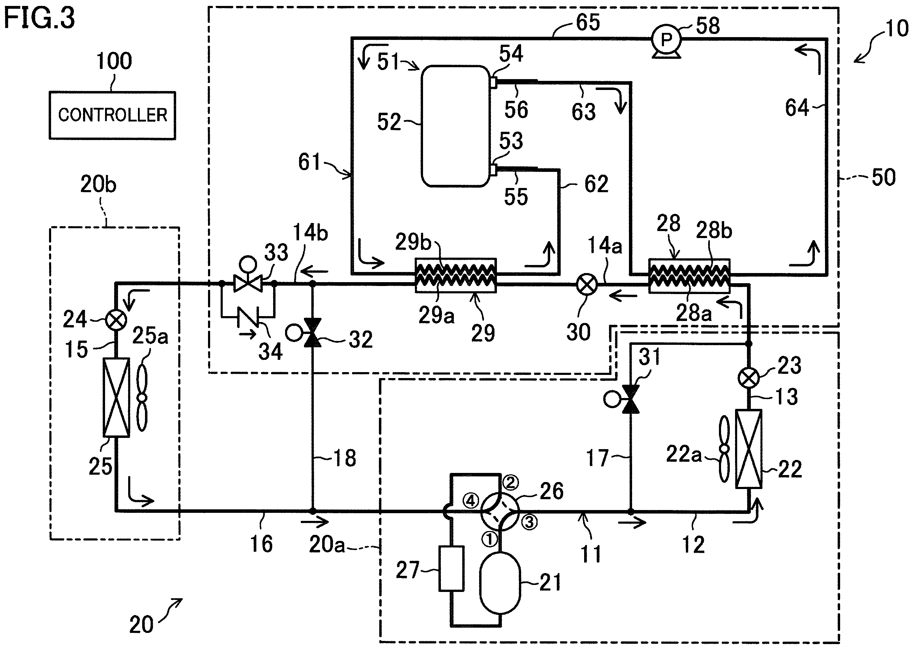

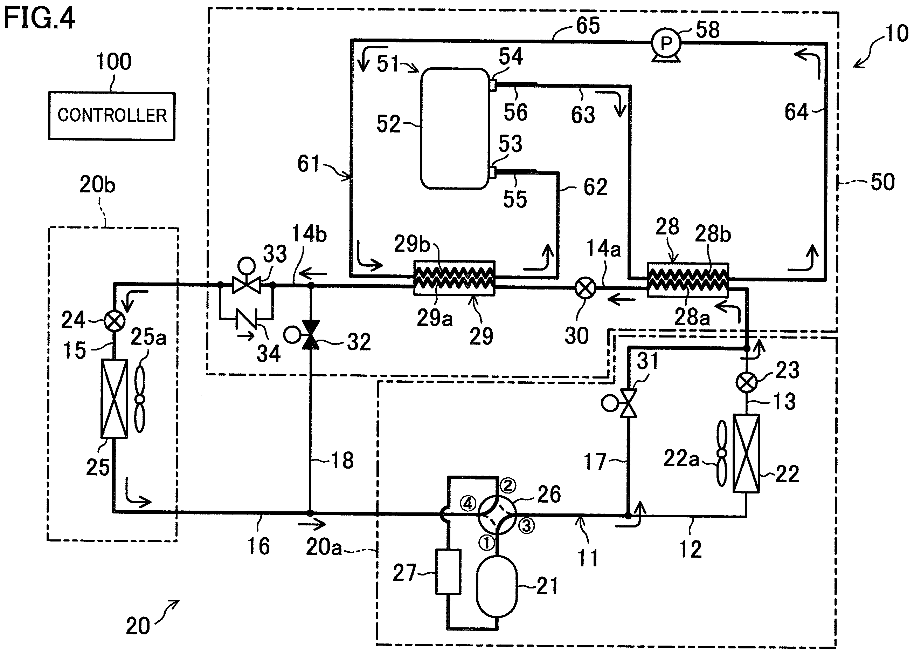

The utilization cooling operation illustrated in FIGS. 3 and 4 performs cooling of a room (which corresponds to a target space for air conditioning) by the indoor heat exchanger (25), using, as a source of cold thermal energy, the thermal storage medium accumulated in the thermal storage tank (52) during the above-described cool storage operation. The refrigerant circulates in the refrigerant circuit (11) such that the refrigerant to which cold thermal energy is given from the thermal storage medium in the thermal storage heat exchanger (29) evaporates in the indoor heat exchanger (25). The thermal storage medium circulates in the thermal storage circuit (61) such that the thermal storage medium having flowed out of the thermal storage tank (52) sequentially passes through the auxiliary heat exchanger (28) and the thermal storage heat exchanger (29) and flows into the thermal storage tank (52) again.

The utilization cooling operation includes the first utilization cooling operation illustrated in FIG. 3 and the second utilization cooling operation illustrated in FIG. 4.

### -First Utilization Cooling Operation-

The first utilization cooling operation performs cooling of a room, using the cold thermal energy stored in the thermal storage tank (52) and the cold thermal energy obtained in the refrigeration cycle of the refrigerant circuit (11). The refrigerant circuit (11) performs a refrigeration cycle in which the outdoor heat exchanger (22) serves as a condenser, the auxiliary heat exchanger (28) and the thermal storage heat exchanger (29) serve as subcoolers (i.e., radiators), and the indoor heat exchanger (25) serves as an evaporator.

Specifically, as illustrated in FIG. 3, the four-way switching valve (26) is set to the first state; the first opening/closing valve (31) and the second opening/closing valve (32) are set to a closed state; and the third opening/closing valve (33) is set to an open state. The degrees of opening of the outdoor expansion valve (23) and the thermal storage expansion valve (30) are set to a fully-open state, and the degree of opening of the indoor expansion valve (24) is set to a predetermined degree (i.e., such a degree of opening which allows the refrigerant at the exit of the indoor heat exchanger (25) to have a predetermined target degree of superheat). The compressor (21), the outdoor fan (22a) and the indoor fan (25a) are actuated.

The refrigerant discharged from the compressor (21) flows into the outdoor heat exchanger (22) through the pipe (12), and dissipates heat to the outdoor air and is thus condensed in the outdoor heat exchanger (22). The condensed refrigerant flows into the refrigerant path (28a) of the auxiliary heat exchanger (28) through the fully-open outdoor expansion valve (23), and is further cooled by the thermal storage medium flowing through the thermal storage path (28b), while the refrigerant passes through the refrigerant path (28a). The refrigerant which has flowed out of the auxiliary heat exchanger (28) flows into the refrigerant path (29a) of the thermal storage heat exchanger (29) through the fully-open thermal storage expansion valve (30), and is further cooled by the thermal storage medium flowing through the thermal storage path (29b). This refrigerant is decompressed by the indoor expansion valve (24), and then absorbs heat from the indoor air in the indoor heat exchanger (25) and evaporates. The indoor air is cooled in this manner. The evaporated refrigerant is temporarily taken into the accumulator (27) through the pipe (16) and the four-way switching valve (26), and thereafter a gas refrigerant separated from a liquid refrigerant is taken into the compressor (21) and compressed.

In the thermal storage circuit (61), the circulation pump (58) is actuated. The thermal storage medium in the thermal storage tank (52) flows into the thermal storage path (28b) of the auxiliary heat exchanger (28) through the second opening (54) and the pipes (56, 63). The thermal storage medium absorbs heat, while passing through the thermal storage path (28b), from the refrigerant flowing through the refrigerant path (28a). The thermal storage medium which has absorbed heat flows into the thermal storage path (29b) of the thermal storage heat exchanger (29) through the circulation pump (58) and the pipes (64, 65). The thermal storage medium further absorbs heat, while passing through the thermal storage path (29b), from the refrigerant flowing through the refrigerant path (29a). The thermal storage medium which has further absorbed heat flows into the thermal storage tank (52) through the pipes (62, 55) and the first opening (53). The cold thermal energy is given to the refrigerant from the thermal storage medium in this manner.

### -Second Utilization Cooling Operation-

The second utilization cooling operation performs cooling of a room, using only the cold thermal energy stored in the thermal storage tank (52). The refrigerant circulates in the refrigerant circuit (11) such that the refrigerant which has passed through the thermal storage heat exchanger (29) evaporates in the indoor heat exchanger (25).

Specifically, as illustrated in FIG. 4, the four-way switching valve (26) is set to the first state; the second opening/closing valve (32) is set to a closed state; and the first opening/closing valve (31) and the third opening/closing valve (33) are set to an open state. The degree of opening of the outdoor expansion valve (23) is set to a fully-closed state; that of the thermal storage expansion valve (30) is set to a fully-open state; and that of the indoor expansion valve (24) is set to a predetermined degree (i.e., such a degree of opening which allows the refrigerant at the exit of the indoor heat exchanger (25) to have a predetermined target degree of superheat). The compressor (21) and the indoor fan (25a) are actuated.

The refrigerant discharged from the compressor (21) flows into the refrigerant path (28a) of the auxiliary heat exchanger (28) through the pipe (12), the first bypass pipe (17) and the pipe (14a), and dissipates heat to the thermal storage medium flowing through the thermal storage path (28b) and is thus condensed. The condensed refrigerant passes through the fully-open thermal storage expansion valve (30), and then flows into the refrigerant path (29a) of the thermal storage heat exchanger (29) and is further cooled, while passing through the refrigerant path (29a), by the thermal storage medium flowing through the thermal storage path (29b). This refrigerant then flows into the indoor expansion valve (24) through the third opening/closing valve (33), and is decompressed. The decompressed refrigerant absorbs heat from the indoor air, while passing through the indoor heat exchanger (25), and evaporates. The indoor air is cooled in this manner. The evaporated refrigerant is temporarily taken into the accumulator (27) through the pipe (16) and the four-way switching valve (26), and thereafter a gas refrigerant separated from a liquid refrigerant is taken into the compressor (21) and compressed.

In the thermal storage circuit (61), the circulation pump (58) is actuated. The thermal storage medium in the thermal storage tank (52) sequentially flows through the second opening (54), the pipes (56, 63), the thermal storage path (28b) of the auxiliary heat exchanger (28), the pipe (64), the circulation pump (58) and the pipe (65), and thereafter flows into the thermal storage path (29b) of the thermal storage heat exchanger (29). The thermal storage medium passing through the thermal storage paths (28b, 29b) absorbs heat from the refrigerant passing through the respective refrigerant paths (28a, 29a). The thermal storage medium which has absorbed heat flows into the thermal storage tank (52) through the pipes (62, 55) and the first opening (53). The cold thermal energy is given to the refrigerant from the thermal storage medium in this manner.

### -Heating Operation-

As already mentioned, the first embodiment utilizes the thermal storage medium in which clathrate hydrates are generated when cooled. Thus, in the cool storage operation in which the thermal storage medium is cooled in the thermal storage heat exchanger (29), the thermal storage medium which has transitioned to clathrate hydrates due to the cooling may accumulate in the thermal storage path (29b) of the thermal storage heat exchanger (29) and clog the thermal storage path (29b). The clogged thermal storage path (29b) may prevent heat exchange between the refrigerant and the thermal storage medium in the thermal storage heat exchanger (29), and decrease the heat exchange efficiency of the thermal storage heat exchanger (29).

In view of this, the air-conditioning system (10) performs a heating operation in which the thermal storage path (29b) of the thermal storage heat exchanger (29) is heated to forcedly remove the clathrate hydrates from the path (29b) if, for example, a flow rate of the thermal storage medium is lower than a predetermined rate, or if a temperature difference between the entrance and the exit of the thermal storage path (29b) of the thermal storage heat exchanger (29) is smaller than a predetermined temperature difference.

Specifically, the heating operation is the same operation as the cool storage operation illustrated in FIG. 2, except that the degree of opening of the thermal storage expansion valve (30) is greater (e.g., a fully-open state) than that in the cool storage operation. That is, the refrigerant discharged from the compressor (21) is condensed in the outdoor heat exchanger (22), and thereafter sequentially flows through the outdoor expansion valve (23), the refrigerant path (28a) of the auxiliary heat exchanger (28), the thermal storage expansion valve (30), the refrigerant path (29a) of the thermal storage heat exchanger (29), and the second bypass pipe (18). In particular, since the degree of opening of the thermal storage expansion valve (30) is greater than that in the cool storage operation, the refrigerant which has flowed out of the auxiliary heat exchanger (28) flows into the thermal storage heat exchanger (29) with a relatively small degree of decompression. The temperature of the refrigerant flowing through the thermal storage heat exchanger (29) is higher than the temperature of the refrigerant flowing through the thermal storage heat exchanger (29) in the cool storage operation, specifically higher than the temperature at which hydrates are generated in the thermal storage medium. The refrigerant which has flowed through the thermal storage heat exchanger (29) is then taken into the accumulator (27) via the four-way switching valve (26).

In the thermal storage circuit (61), the thermal storage medium which has flowed out of the thermal storage tank (52) and flowed into the thermal storage path (28b) of the auxiliary heat exchanger (28) absorbs heat from the refrigerant flowing through the refrigerant path (28a), and thereafter flows into the thermal storage path (29b) of the thermal storage heat exchanger (29). Since the temperature of the refrigerant flowing through the refrigerant path (29a) is higher than the temperature at which hydrates are generated in the thermal storage medium, the clathrate hydrates clogging the thermal storage path (29b) are gradually melted from a vicinity of the inner wall of the pipe that constitutes the thermal storage path (29b), and are eventually removed from the inner wall of that pipe. The removed clathrate hydrates are circulated by the circulation pump (58), and flow into the interior of the thermal storage tank (52).

### <More Configurations of Thermal Storage Unit According To First Embodiment>

However, some connecting structures of the inlet pipe (55) and the outlet pipe (56) with the thermal storage tank (52) may cause a problem, such as a reduction in the heat exchange properties of the thermal storage heat exchanger (29) in the above-described heating operation.

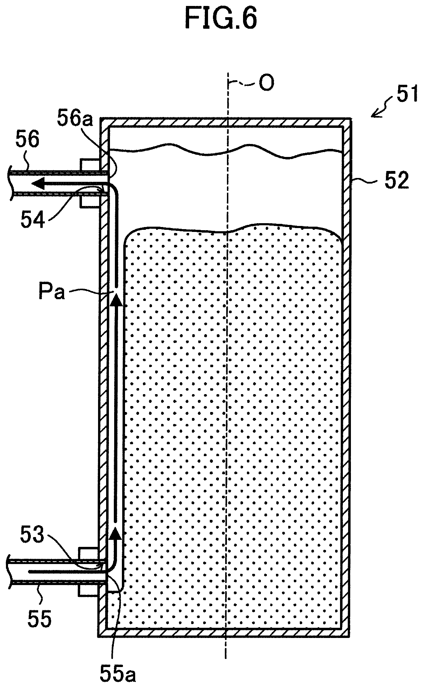

For example, a known example is considered in which, as illustrated in FIG. 6, the outlet end (55a) of the inlet pipe (55) and the inlet end (56a) of the outlet pipe (56) are located near the sidewall of the thermal storage tank (52) so as to be open in the horizontal direction, and in which the inlet end (56a) of the outlet pipe (56) is located higher than the outlet end (55a) of the inlet pipe (55). In the heating operation, the thermal storage medium containing the clathrate hydrates removed from the thermal storage path (29b) of the thermal storage heat exchanger (29) flows into the thermal storage tank (52) through the outlet end (55a) of the inlet pipe (55), with a temperature higher than the temperature at which the hydrates are generated. This thermal storage medium flows toward the inlet end (56a) of the outlet pipe (56), while partially melting a layer of clathrate hydrate (i.e., dotted area in FIG. 6) of the thermal storage medium which has already been accumulated in the thermal storage tank (52). However, in the known example, the thermal storage medium which has flowed into the thermal storage tank (52) flows toward the inlet end (56a) of the outlet pipe (56) along the sidewall of the thermal storage tank (52) where the thermal storage medium smoothly flows, which results in the formation of a fixed flow path (pa). FIG. 6 shows an example in which the fixed flow path (pa) extends along the sidewall of the thermal storage tank (52) and is formed so as to connect the outlet end (55a) of the inlet pipe (55) and the inlet end (56a) of the outlet pipe (56) in the shortest distance.

If this fixed flow path (pa) is formed in the heating operation, and the cool storage operation is performed after the heating operation, the thermal storage medium which has been cooled in the thermal storage heat exchanger (29) and flowed into the thermal storage tank (52) from the outlet end (55a) of the inlet pipe (55) passes through the fixed flow path (pa) and flows out of the thermal storage tank (52) from the inlet end (56a) of the outlet pipe (56). If this occurs, it is less likely for the following phenomenon to occur in the thermal storage tank (52) in the cool storage operation: the thermal storage medium that has newly flowed into the tank (52) comes in contact with the subcooled solution of the thermal storage medium accumulated in advance, and the subcooled solution accordingly transitions to clathrate hydrates (in other words, recovery from subcooling state is less likely to occur). Consequently, a state in the thermal storage tank (52) is maintained without a change in the temperature of the thermal storage medium. As a result, a sufficient amount of cold thermal energy may not be stored in the thermal storage tank (52). Further, in this state, the thermal storage medium which has flowed out of the thermal storage tank (52) circulates in the thermal storage circuit (61) and flows into the thermal storage heat exchanger (29) again. Since the thermal storage medium that has flowed into the thermal storage heat exchanger (29) again contains the subcooled solution and the clathrate hydrates, the thermal storage path (29b) of the thermal storage heat exchanger (29) may be easily clogged with the clathrate hydrates of the thermal storage medium that has flowed therein again. This may reduce the heat exchange properties of the thermal storage heat exchanger (29).

In view of this, the first embodiment adopts a configuration illustrated in FIGS. 5(A) and 5(B) as a configuration of the thermal storage tank unit (51). As illustrated in FIGS. 5(A) and 5(B), the outlet end (55a) of the inlet pipe (55) is located below the inlet end (56a) of the outlet pipe (56). The outlet end (55a) of the inlet pipe (55) is located at an inner position of the thermal storage tank (52), and the inlet end (56a) of the outlet pipe (56) is located near the sidewall of the thermal storage tank (52) so as to be open in the horizontal direction.

In particular, the inlet pipe (55) is designed to discharge the thermal storage medium downward in the axial direction of the thermal storage tank (52) at a center of a horizontal cross section of the thermal storage tank (52). That is, the inlet pipe (55) is inserted in the thermal storage tank (52) from the first opening (53) in the horizontal direction, and is bent such that the outlet end (55a) of the inlet pipe (55) is open to the bottom of the thermal storage tank (52) on the center axis (O) of the cylindrical thermal storage tank (52).

This configuration allows the thermal storage medium which has flowed out of the thermal storage path (29b) of the thermal storage heat exchanger (29) to have a temperature higher than the temperature at which hydrates are generated, when it flows into the thermal storage tank (52) through the inlet pipe (55) in the heating operation. At this moment, the thermal storage medium collides with the bottom of the thermal storage tank (52), since the thermal storage medium is discharged downward from the inlet pipe (55) on the center axis (O) of the thermal storage tank (52). On the other hand, at the start of the heating operation, the thermal storage medium containing the subcooled solution and the clathrate hydrates has been accumulated in the thermal storage tank (52) due to the cool storage operation prior to the heating operation. Thus, the thermal storage medium right after it flows in and collides with the bottom of the thermal storage tank (52) flows toward an upper side of the thermal storage tank (52) while spreading in all directions along the bottom and the sidewall of the thermal storage tank (52) as indicated by arrows in FIG. 5(B). In addition, the thermal storage medium right after it flows in has a temperature higher than the temperature at which hydrates are generated. Thus, while flowing inside the thermal storage tank (52), the thermal storage medium comes in contact with and melts the clathrate hydrates of the thermal storage medium which has already been accumulated in the thermal storage tank (52). The thermal storage medium which is melted and contains a small amount of clathrate hydrates (i.e., the thermal storage medium with a relatively low density of the clathrate hydrates) is accumulated in an upper portion of the clathrate hydrate layer, and is discharged to the outside of the thermal storage tank (52) (namely, to the thermal storage path (28b) of the auxiliary heat exchanger (28)) from the inlet end (56a) of the outlet pipe (56).

That is, in the first embodiment, the thermal storage medium which has flowed into the thermal storage tank (52) in the heating operation flows as indicated by arrows in FIG. 5(B), thereby preventing the formation of the fixed flow path (pa) shown in FIG. 6. Thus, in a cool storage operation after the heating operation, the thermal storage medium cooled in the thermal storage heat exchanger (29) causes the subcooled solution in the thermal storage tank (52) to transition to clathrate hydrates once it flows into the tank (52). This achieves stable generation of the clathrate hydrates and a necessary amount of storage of the cold thermal energy in the cool storage operation. In addition, even if the thermal storage medium cooled in the thermal storage heat exchanger (29) contains clathrate hydrates, there is not a possibility that the clathrate hydrates flow into the thermal storage heat exchanger (29) again, and clogging of the thermal storage path (29b) of the thermal storage heat exchanger (29) is prevented. Thus, the heat exchange properties of the thermal storage heat exchanger (29) are not reduced but maintained.

It is recommended that the thermal storage medium to flow into the thermal storage tank (52) in the heating operation have a sufficiently low flow rate. As an example, if the capacity of the thermal storage tank (52) is about 250 liters, and the height of the thermal storage tank (52) is about 2 meters, the flow rate of the thermal storage medium is set to be about "0.3 m/sec" by adjusting the diameter of the inlet pipe (55).

A sufficiently low flow rate of the thermal storage medium is recommended because, in the heating operation, if the flow rate of the thermal storage medium is too high relative to the size of the thermal storage tank (52), even a slight change of the distance between the outlet end (55a) of the inlet pipe (55) and the bottom of the thermal storage tank (52) from a designed distance may cause the thermal storage medium in the thermal storage tank (52) to drift, unlike FIG. 5(B), and may result in the formation of the fixed flow path (pa). It is therefore recommended to determine the flow rate of the thermal storage medium to be sufficiently low, based on, e.g., the capacity or the height of the thermal storage tank (52) in order that the thermal storage medium may flow as shown in FIG. 5(B) in the heating operation, irrespective of error of the distance between the outlet end (55a) of the inlet pipe (55) and the bottom of the thermal storage tank (52).

### <Advantages>

In the thermal storage tank unit (51) of the first embodiment, the thermal storage medium is discharged in the axial direction, more specifically, in a downward direction, of the thermal storage tank (52) at an approximately central position of the thermal storage tank (52). Thus, as illustrated in FIG. 5(B), the thermal storage medium flows toward an upper side of the thermal storage tank (52) while spreading in all directions along the bottom and the sidewall of the thermal storage tank (52). This may reduce the formation of the fixed flow path (pa) as illustrated in FIG. 6 in the thermal storage tank (52). As a result, a necessary amount of cold thermal energy is stored in the thermal storage tank (52). In addition, it is less likely that the thermal storage path (29b) in the thermal storage heat exchanger (29) is clogged with the clathrate hydrates, and the degree of decrease in the heat exchange properties is reduced.

Further, the inlet end (56a) of the outlet pipe (56) is located near the sidewall of the thermal storage tank (52), and the thermal storage medium is taken into the outlet pipe (56) in the approximately horizontal direction. Thus, the thermal storage medium, which is a solution in large part, flows out of the thermal storage tank (52) when taken into the outlet pipe (56) in the horizontal direction.

In the air-conditioning system (10) of the first embodiment, a configuration illustrated in FIG. 5 is adopted as the configuration of the thermal storage tank unit (51). Thus, the fixed flow path (pa) illustrated in FIG. 6 is less likely to be formed even in the heating operation. The air-conditioning system (10) is therefore capable of storing a necessary amount of cold thermal energy in the thermal storage tank (52), and cooling a room by utilizing the stored cold thermal energy.

### «Second Embodiment»

A second embodiment is different from the first embodiment in the configuration of the thermal storage tank unit (51). The other configurations of the air-conditioning system (10) of the second embodiment are the same as, or similar to, those of the first embodiment.

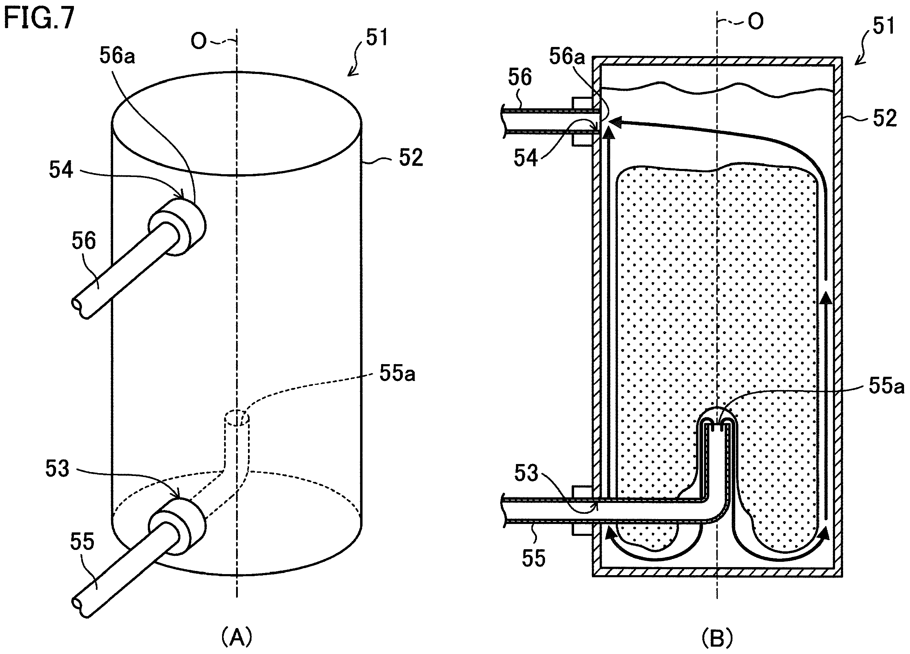

In the second embodiment, as illustrated in FIGS. 7(A) and 7(B), the outlet end (55a) of the inlet pipe (55) is located below the inlet end (56a) of the outlet pipe (56). The outlet end (55a) of the inlet pipe (55) is located at an inner position of the thermal storage tank (52), and the inlet end (56a) of the outlet pipe (56) is located near the sidewall of the thermal storage tank (52) so as to be open in the horizontal direction.

In particular, the inlet pipe (55) is designed to discharge the thermal storage medium upward in the axial direction of the thermal storage tank (52) at the center of the horizontal cross section of the thermal storage tank (52). That is, the inlet pipe (55) is inserted in the thermal storage tank (52) from the first opening (53) in the horizontal direction, and is bent such that the outlet end (55a) is open to the upper surface portion of the thermal storage tank (52), which is opposite to the direction in the first embodiment, on the center axis (O) of the thermal storage tank (52).

This configuration allows the thermal storage medium with a temperature higher than the temperature at which hydrates are generated, to flow into the inlet pipe (55) from the thermal storage path (29b) of the thermal storage heat exchanger (29) in the heating operation. The thermal storage medium collides with the layer of clathrate hydrates in the thermal storage tank (52) which is located above the outlet end (55a) of the inlet pipe (55), since the thermal storage medium is discharged upward from the inlet pipe (55) on the center axis (O) of the thermal storage tank (52). The thermal storage medium which has collides with the layer of clathrate hydrates flows toward the bottom of the thermal storage tank (52) along the inlet pipe (55) as indicated by arrows in FIG. 7(B). Then, the thermal storage medium flows toward the upper side of the thermal storage tank (52) while spreading in all direction along the bottom and the sidewall of the thermal storage tank (52). In addition, the thermal storage medium right after it flows in has a temperature higher than the temperature at which hydrates are generated. Thus, while flowing inside the thermal storage tank (52), the thermal storage medium comes in contact with and melts the clathrate hydrates in the thermal storage tank (52). The thermal storage medium which is melted and contains a small amount of clathrate hydrates (i.e., the thermal storage medium with a relatively low density of the clathrate hydrates) is accumulated in an upper portion of the clathrate hydrate layer, and is discharged to the outside of the thermal storage tank (52) (namely, to the thermal storage path (28b) of the auxiliary heat exchanger (28)) from the inlet end (56a) of the outlet pipe (56).

Such a thermal storage tank unit (51) may have the same or similar advantages as/to those in the first embodiment.

In the second embodiment, too, as in the first embodiment, it is recommended that the flow rate of the thermal storage medium is sufficiently low. A sufficiently low flow rate of the thermal storage medium is recommended because, in the heating operation, if the flow rate of the thermal storage medium is too high, the thermal storage medium which has flowed into the thermal storage tank (52) not only melts the clathrate hydrates located directly above the outlet end (55a) of the inlet pipe (55), but also passes through the layer of the clathrate hydrates toward the upper surface of the thermal storage tank (52), which may result in the formation of the fixed flow path (pa).

### «Third Embodiment»

A third embodiment is different from the first and second embodiments in the configuration of the thermal storage tank unit (51). The other configurations of the air-conditioning system (10) of the third embodiment are the same as, or similar to, those of the first and second embodiments.

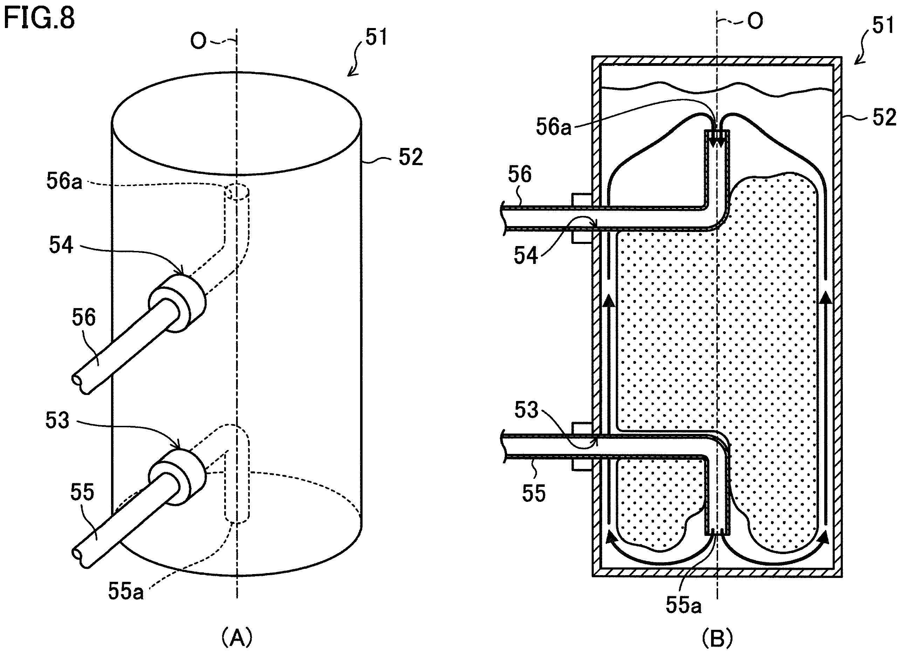

In the third embodiment, as illustrated in FIGS. 8(A) and 8(B), the outlet end (55a) of the inlet pipe (55) is located below the inlet end (56a) of the outlet pipe (56).

In particular, the outlet end (55a) of the inlet pipe (55) and the inlet end (56a) of the outlet pipe (56) are both located at inner positions of the thermal storage tank (52). The inlet pipe (55) is designed to discharge the thermal storage medium downward in the axial direction of the thermal storage tank (52) at the center of the horizontal cross section of the thermal storage tank (52). That is, the inlet pipe (55) is inserted in the thermal storage tank (52) from the first opening (53) in the horizontal direction, and is bent such that the outlet end (55a) is open to the bottom of the thermal storage tank (52) on the center axis (O) of the thermal storage tank (52).

Further, the outlet pipe (56) is designed to take the thermal storage medium therein from above along the axial direction of the thermal storage tank (52) at the center of the horizontal cross section of the thermal storage tank (52). That is, the outlet pipe (56) is inserted in the thermal storage tank (52) from the second opening (54) in the horizontal direction, and is bent such that the inlet end (56a) is open to the upper surface portion of the thermal storage tank (52) on the center axis (O) of the thermal storage tank (52).

This configuration allows the thermal storage medium with a temperature higher than the temperature at which hydrates are generated, to flow into the inlet pipe (55) from the thermal storage path (29b) of the thermal storage heat exchanger (29) in the heating operation. The thermal storage medium is discharged downward on the center axis (O) of the thermal storage tank (52), and collides with the bottom of the thermal storage tank (52). The thermal storage medium which has collided with the bottom of the thermal storage tank (52) flows toward the upper side of the thermal storage tank (52) while spreading in all directions along the bottom and the sidewall of the thermal storage tank (52) as indicated by arrows in FIG. 8(B). In addition, the thermal storage medium right after it flows in has a temperature higher than the temperature at which hydrates are generated. Thus, while flowing inside the thermal storage tank (52), the thermal storage medium comes in contact with and melts the clathrate hydrates of the thermal storage medium which has already been accumulated in the thermal storage tank (52). The thermal storage medium which is melted and contains a small amount of clathrate hydrates (i.e., the thermal storage medium with a relatively low density of the clathrate hydrates) is accumulated in an upper portion of the clathrate hydrate layer. The thermal storage medium accumulated in the upper portion is discharged to the outside of the thermal storage tank (52) (namely, to the thermal storage path (28b) of the auxiliary heat exchanger (28)) from the inlet end (56a) of the outlet pipe (56) as illustrated in FIG. 8(B).

Such a thermal storage tank unit (51) may have the same or similar advantages as/to those in the first and second embodiments.

It can be said, particularly in the third embodiment, that drift of the thermal storage medium is less likely to occur in the thermal storage tank (52) in the heating operation, compared with the first and second embodiments, since the inlet end (56a) of the outlet pipe (56) is arranged to face upward at the center of the thermal storage tank (52). Thus, the fixed flow path (pa) is less likely to be formed in the third embodiment than in the first and second embodiments. Further, since the inlet end (56a) of the outlet pipe (56) faces upward, a portion of the thermal storage medium with a higher temperature than the other portion of the thermal storage medium accumulated in the upper portion may flow out of the thermal storage tank (52) through the outlet pipe (56). Thus, the heat exchange properties of the thermal storage heat exchanger (29) in the heating operation, for example, is improved, compared with the first and second embodiments, and clogging of the thermal storage path (29b) of the thermal storage heat exchanger (29) is less likely to occur than in the first and second embodiments.

In the third embodiment, too, as in the first and second embodiments, it is recommended that the thermal storage medium have a sufficiently low flow rate.

### «Fourth Embodiment»

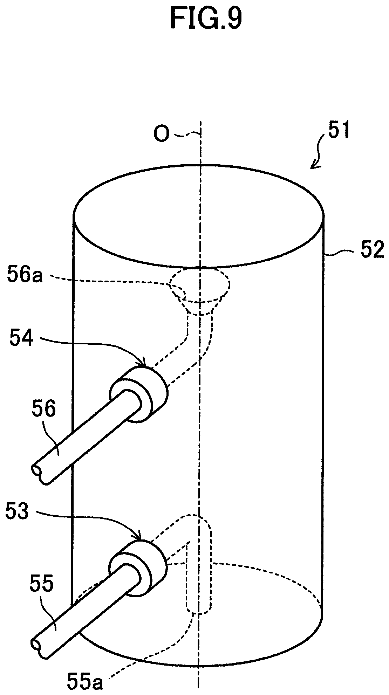

As illustrated in FIG. 9, the orientations of the outlet end (55a) of the inlet pipe (55) and the inlet end (56a) of the outlet pipe (56) in a fourth embodiment are the same as, or similar to, those in the third embodiment. In the fourth embodiment, however, the diameter of the outlet pipe (56) is increased at the inlet end (56a) of the outlet pipe (56).

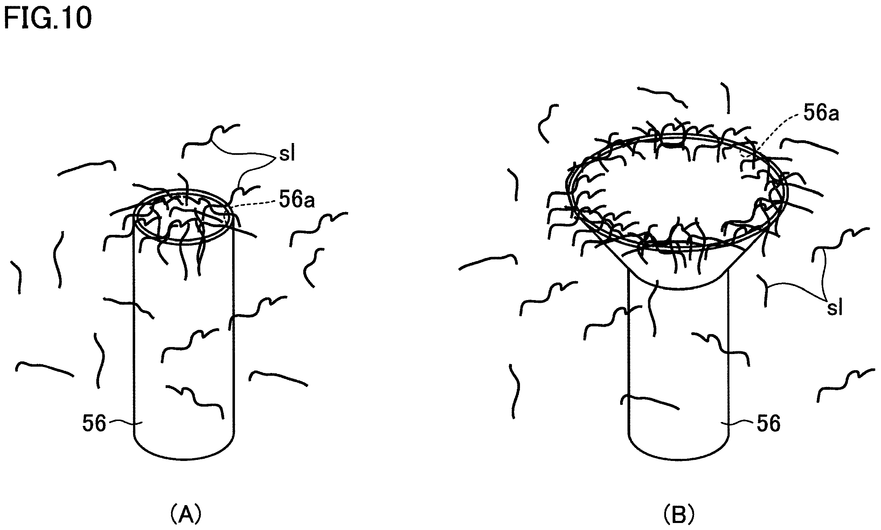

As mentioned earlier, the thermal storage medium accumulated in the upper portion of the clathrate hydrate layer is a thermal medium which is a solution in large part, but it also contains clathrate hydrates although in a small amount. Clathrate hydrates (sl) with a greater grain size are more likely to adhere to the periphery of the inlet end (56a) of the outlet pipe (56) as illustrated in FIG. 10(A). The clathrate hydrates (sl) adhering to the periphery of the inlet end (56a) are gradually build up at the periphery, and may clog the inlet end (56a) depending on the size of the inlet end (56a).

On the other hand, in the fourth embodiment, the diameter of the outlet pipe (56) is gradually increased at the inlet end (56a) of the outlet pipe (56). Thus, even if the clathrate hydrates (sl) adhere to, and are build up at, the periphery of the inlet end (56a), the inlet end (56a) is less likely to be clogged with the clathrate hydrates (sl) as illustrated in FIG. 10(B).

It is appropriately decided how much the diameter of the outlet pipe (56) is increased at the inlet end (56a), based on typical grain sizes of the clathrate hydrates (sl), for example. As a concrete example, if the diameter of the outlet pipe (56) is about 16 mm, the diameter of the inlet end (56a) may be designed to be about twice (i.e., about 32 mm) the diameter of the outlet pipe (56).

In the fourth embodiment, the orientations of the outlet end (55a) of the inlet pipe (55) and the inlet end (56a) of the outlet pipe (56) are the same as, or similar to, those in the third embodiment. Thus, the fourth embodiment may further provide the advantages of the third embodiment.

### «Other Embodiments»

In addition to the outlet end (55a) of the inlet pipe (55) which faces upward as described in the second embodiment, the inlet end (56a) of the outlet pipe (56) may also face to the upper surface portion of the thermal storage tank (52) at the center of the thermal storage tank (52) by bending the outlet pipe (56) as described in the third embodiment. Further, as in the fourth embodiment, the diameter of the outlet pipe (56) may be increased at the inlet end (56a) of the outlet pipe (56).

In the first to fourth embodiments, the inlet pipe (55) alone or both of the inlet pipe (55) and the outlet pipe (56) does or do not necessarily have to be bent in the axial direction in the interior of the thermal storage tank (52). That is, the positions at which the first opening (53) and the second opening (54) are formed in the thermal storage tank (52), and the bending directions of the inlet pipe (55) and the outlet pipe (56) may be appropriately adjusted so that the outlet end (55a) of the inlet pipe (55) alone or both of the outlet end (55a) of the inlet pipe (55) and the inlet end (56a) of the outlet pipe (56) face in the directions shown in FIGS. 5 and 7-9 at the center of the thermal storage tank (52).

In the first to fourth embodiments, the inlet pipe (55) and the outlet pipe (56) may have the same diameter or different diameters.

The thermal storage tank (52) does not have to have the cylindrical shape, and may have any shape, such as a rectangular column shape.

### INDUSTRIAL APPLICABILITY

As can be seen from the foregoing description, the present invention is useful as a thermal storage tank unit which stores cold thermal energy by using a thermal storage medium in which clathrate hydrates are generated when cooled, and an air-conditioning system which provides air conditioning by utilizing the cold thermal energy stored in the unit.

### DESCRIPTION OF REFERENCE CHARACTERS

- 10: Air-Conditioning System
- 29: Thermal Storage Heat Exchanger
- 29a: Refrigerant Path (Thermal Medium Path)
- 29b: Thermal Storage Path
- 51: Thermal Storage Tank Unit
- 52: Thermal Storage Tank
- 55: Inlet Pipe
- 55a: Outlet End
- 56: Outlet Pipe
- 56a: Inlet End
- 100: Controller (Operation Control Section)

## Claims

1. A thermal storage tank unit connected to a thermal storage heat exchanger (29) which exchanges heat between a thermal storage medium in which clathrate hydrates are generated when cooled, and a thermal medium,
the thermal storage tank unit comprising:
a cylindrical thermal storage tank (52) capable of accumulating the thermal storage medium therein after the heat exchange in the thermal storage heat exchanger (29), the cylindrical thermal storage tank (52) being arranged to have its axial direction extend vertically;
an inlet pipe (55) whose inlet end is connected to an outflow side of the thermal storage heat exchanger (29) and whose outlet end (55a) is inserted in the thermal storage tank (52) to lead the thermal storage medium to flow into the thermal storage tank (52); and
an outlet pipe (56) whose inlet end (56a) is inserted in the thermal storage tank (52) and whose outlet end is connected to an inflow side of the thermal storage heat exchanger (29) to lead the thermal storage medium in the thermal storage tank (52) to flow out of the thermal storage tank (52), wherein
the outlet end (55a) of the inlet pipe (55) is located below the inlet end (56a) of the outlet pipe (56), and
the inlet pipe (55) discharges the thermal storage medium in the axial direction of the thermal storage tank (52) at approximately a center of a horizontal cross section of the thermal storage tank (52).

2. The thermal storage tank unit of claim 1, wherein
the inlet pipe (55) discharges the thermal storage medium downward in the thermal storage tank (52) in the axial direction of the thermal storage tank (52).

3. The thermal storage tank unit of claim 1, wherein
the inlet pipe (55) discharges the thermal storage medium upward in the thermal storage tank (52) in the axial direction of the thermal storage tank (52).

4. The thermal storage tank unit of claim 2 or 3, wherein
the inlet end (56a) of the outlet pipe (56) is located near a sidewall of the thermal storage tank (52), and the thermal storage medium is taken into the outlet pipe (56) in an approximately horizontal direction.

5. The thermal storage tank unit of claim 2 or 3, wherein
the thermal storage medium is taken into the outlet pipe (56) from above along the axial direction of the thermal storage tank (52) at approximately the center of the horizontal cross section of the thermal storage tank (52).

6. The thermal storage tank unit of claim 5, wherein
the outlet pipe (56) has an increased diameter at the inlet end (56a) of the outlet pipe (56).

7. An air-conditioning system, comprising:
the thermal storage tank unit (50) of any one of claims 1-6,
the thermal storage heat exchanger (29) having a thermal storage path (29b) in which the thermal storage medium flows and a thermal medium path (29a) in which the thermal medium flows, the thermal storage path (29b) being connected to the thermal storage tank unit (50),
an utilization-side heat exchanger (25) connected to the thermal medium path (29a) and capable of cooling a target space for air conditioning by using, as a source of cold thermal energy, the thermal storage medium accumulated in the thermal storage tank (52) of the thermal storage tank unit (50), and
an operation control section (100) capable of performing
a cooling operation in which the target space for air conditioning is cooled by using the thermal storage medium as cold thermal energy, and
a heating operation in which if the thermal storage path (29b) is clogged with the thermal storage medium in a state of slurry, a thermal medium with a temperature higher than a temperature at which hydrates of the thermal storage medium are generated is allowed to flow in the thermal medium path (29a), thereby removing the thermal storage medium from the thermal storage path (29b).
